# DEMANDE DE BREVET EUROPEEN

(11) **EP 0 985 912 A1**
(43) Date de publication de la demande: **15.03.2000**
(21) Numéro de dépôt: 99402183.0
(22) Date de dépôt: 03.09.1999
(51) Int. Cl.: G01D 13/04, G12B 11/04, G01P 1/08

(54) **Dispositif d'indication de paramètres de fonctionnement pour véhicule automobile**

(30) Priorité: 09.09.1998 FR 9811274
(71) Demandeur: RENAULT, 92109 Boulogne-Billancourt (FR)
(72) Inventeur: Marzolf, Dominique, 78800 Houilles (FR)

(57) **Abrégé**

Dispositif d'indication de paramètres de fonctionnement, lié à un véhicule automobile, comportant un cadran doté de graduations, caractérisé en ce que ledit dispositif possède une couronne mobile (10), munie d'un moyen de lecture (3) de la valeur des paramètres, ladite couronne mobile (10) coopérant avec un moyen d'entraînement en rotation (4).

## Description

L'invention concerne un dispositif d'indication destiné à un véhicule automobile et plus particulièrement un dispositif indiquant différents paramètres de fonctionnement dudit véhicule.

On connaît de manière générale des compteurs installés dans des ouvertures prévues dans le tableau de bord d'un véhicule. Ces compteurs sont équipés d'un cadran gradué sur son pourtour le long duquel se déplace une aiguille. La position de l'aiguille devant une graduation indique la valeur du paramètre ainsi mesuré.

Les publications EP-A-0 802 079 et EP-A-0 662 311 décrivent un compteur de vitesse qui comporte un fond fixe muni de graduations et au moins une aiguille centrale. Cette aiguille centrale est montée à rotation autour d'un axe perpendiculaire au plan formé par le fond fixe et est entraînée dans un mouvement rotatif par l'intermédiaire d'un dispositif de transmission, commandé par un moyen de mesure de la vitesse du véhicule.

Cependant, de tels systèmes ont pour inconvénient de prendre beaucoup d'espace sur le tableau de bord. Cet inconvénient vient notamment de la surface perdue à l'intérieur du cadran, ladite surface étant monopolisée par l'aiguille de lecture. En effet, la surface balayée par l'aiguille n'est pas disponible comme zone d'affichage pour d'autres informations.

On connaît également de manière générale, des compteurs à affichage digital de valeurs.

L'invention a donc pour objet de remédier à ces inconvénients en proposant un compteur pour véhicule automobile équipé de moyen de lecture du type cadran à aiguille, ledit compteur laissant un maximum d'espace disponible pour l'insertion d'autres systèmes d'affichage dans la zone dudit cadran à aiguille.

Selon une caractéristique de l'invention, le dispositif d'affichage possède une couronne mobile coopérant avec un moyen d'entraînement en rotation.

Selon une autre caractéristique de l'invention, la couronne mobile possède un moyen de lecture de la valeur du paramètre étudié.

Selon une autre caractéristique de l'invention, une partie de la couronne mobile est dentée intérieurement et engrène avec un pignon.

Selon une autre caractéristique de l'invention, une partie de la couronne mobile est dentée extérieurement et engrène avec un pignon.

Selon une autre caractéristique de l'invention, la partie de la couronne et le pignon sont un couple conique.

Selon une autre caractéristique de l'invention, le cadran comporte une couronne translucide qui sépare un disque central d'une couronne extérieure, ladite couronne extérieure comportant des graduations représentatives de la valeur du paramètre mesuré.

Selon une autre caractéristique de l'invention, la couronne est proéminente ou affleurante aux disques.

Selon une autre caractéristique de l'invention, le moyen de lecture est un signet translucide ou opaque.

Selon une autre caractéristique de l'invention, un moyen d'éclairage laisse diffuser la lumière par la couronne translucide.

Selon une autre caractéristique de l'invention, le disque central possède une zone d'affichage pour d'autres informations.

D'autres avantages et caractéristiques de l'invention seront mis en évidence dans la description qui suit, donnée à titre d'exemple, en référence aux dessins annexés dans lesquels :
- la figure 1 représente un compteur à cadran selon l'invention.
- la figure 2 représente une vue perspective du système d'entraînement du moyen de lecture selon un exemple de réalisation de l'invention.
- la figure 3 représente une vue perpective du système d'entraînement du moyen de lecture selon un autre exemple de réalisation de l'invention.

A titre d'exemple, les compteurs représentés sont des compteurs de vitesse. Cet exemple est arbitraire et n'exclut pas tout autre type de compteur.

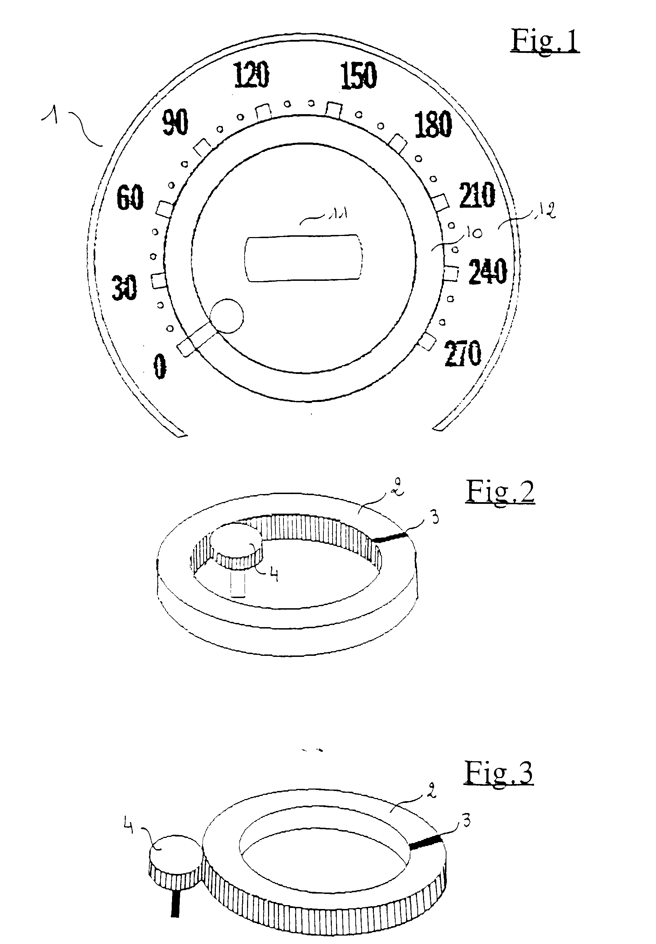

Tel que représenté à la figure 1, le compteur se compose, dans un exemple de réalisation, d'un cadran 1 de forme sensiblement circulaire, situé sur le tableau de bord du véhicule. Ce cadran 1 comporte une couronne translucide 10 qui sépare un disque central 11 d'une couronne extérieure 12. La couronne extérieure 12 comporte des graduations représentatives de la valeur du paramètre mesuré.

La couronne 10 comporte une partie dentée 2, placée sous le cadran 1. Le cadran circulaire 1 et la partie dentée 2 sont coaxiaux. La couronne 10 porte un signet radial 3 qui sert de moyen de lecture de la valeur du paramètre mesuré. Le signet 3 peut être opaque ou translucide. Derrière la couronne 10 est disposé un moyen d'éclairage (non représenté).

Dans un exemple de réalisation représenté à la figure 2, la partie 2 de la couronne 10 est dentée intérieurement. Cette couronne engrène avec un pignon 4 placé à l'intérieur de ladite couronne. Le pignon 4 est entraîné de façon connue en soi et non représentée.

Dans un autre exemple de réalisation représenté à la figure 3, la partie 2 de la couronne 10 est dentée extérieurement, ladite couronne engrène avec un pignon 4, ledit pignon 4 étant placé dans ce cas à l'extérieur de la couronne. Le pignon 4 est entraîné de façon connue en soi et non représentée.

Dans un autre exemple de réalisation, la partie 2 de la couronne 10 et le pignon 4 peuvent être également un couple conique.

Dans les trois exemples précédemment cités, la couronne 10 est entraînée en rotation par le pignon 4.

La rotation de la couronne 10 autour de son axe entraîne donc le déplacement du signet radial de lecture 3 entre deux positions extrêmes correspondant à des valeurs minimale et maximale dudit paramètre.

La position du signet radial de lecture 3 devant une graduation de la couronne extérieure 12 indique donc la valeur du paramètre mesuré.

Le disque central 11 permet de ménager un espace libre à l'intérieur de la couronne 2. Ainsi, cet espace libre autorise l'insertion d'un autre affichage, ledit affichage pouvant être, à titre d'exemple, un affichage d'informations symboliques. On réalise donc un gain de place non négligeable dans l'agencement du tableau de bord.

Ce type de compteur permet une lecture facile et rapide du paramètre mesuré, avantage non négligeable pour l'automobiliste qui effectue la lecture et qui ne détourne donc son attention que très peu de temps.

La couronne 10 peut être proéminente ou affleurante aux disques 11 et 12.

Dans un autre exemple de réalisation, le cadran 1 peut comporter un évidement à la place d'une couronne translucide. Dans ce cas, la couronne 2 vient s'insérer dans l'évidement dudit cadran.

Lors d'une utilisation de nuit, le moyen d'éclairage laisse diffuser la lumière par la couronne translucide 10, le signet 3 étant visible de par son opacité. Si le signet est translucide également, il sera préférable qu'il soit d'une couleur particulière pour bien visualiser sa position.

## Revendications

1. Dispositif d'indication de paramètres de fonctionnement, lié à un véhicule automobile, comportant un cadran doté de graduations, caractérisé en ce que ledit dispositif possède une couronne mobile (10), munie d'un moyen de lecture (3) de la valeur des paramètres, ladite couronne mobile (10) coopérant avec un moyen d'entraînement en rotation (4).

2. Dispositif d'indication selon la revendication 1, caractérisé en ce qu'une partie (2) de la couronne mobile (10) est dentée intérieurement et engrène avec un pignon (4).

3. Dispositif d'indication selon la revendication 1, caractérisé en ce qu'une partie (2) de la couronne mobile (10) est dentée extérieurement et engrène avec un pignon (4).

4. Dispositif d'indication selon la revendication 1, caractérisé en ce que la partie (2) de la couronne (10) et le pignon (4) sont un couple conique.

5. Dispositif d'indication selon l'une des revendications 1 à 4, caractérisé en ce que le cadran (1) comporte une couronne translucide (10) qui sépare un disque central (11) d'une couronne extérieure (12), ladite couronne extérieure (12) comportant des graduations représentatives de la valeur du paramètre mesuré.

6. Dispositif d'indication selon la revendication 5, caractérisé en ce que la couronne (10) est proéminente ou affleurante aux disques (11) et (12).

7. Dispositif d'indication selon la revendication 6, caractérisé en ce que le moyen de lecture (3) est un signet translucide ou opaque.

8. Dispositif d'indication selon la revendication 7, caractérisé en ce qu'un moyen d'éclairage laisse diffuser la lumière par la couronne translucide (10).

9. Dispositif d'indication selon l'une quelconque des revendications 5 à 8, caractérisé en ce que le disque central (11) est une zone d'affichage pour d'autres informations.
